# EUROPEAN PATENT APPLICATION

(11) **EP 1 502 816 A1**
(43) Date of publication of application: **02.02.2005**
(21) Application number: 04016752.0
(22) Date of filing: 15.07.2004
(51) Int. Cl.: B60R 1/00

(54) **Vehicle perimeter display device**

(30) Priority: 31.07.2003 JP 2003204609
(71) Applicant: Nissan Motor Co., Ltd., Yokohama-shi, Kanagawa 221-0023 (JP)
(72) Inventor: Hirota, Masaki, Zushi-shi Kanagawa 249-0004 (JP); Igari, Yuichi, Atsugi-shi Kanagawa 243-0014 (JP); Miki, Yonosuke, Atsugi-shi Kanagawa 243-0025 (JP)
(74) Representative: Grünecker, Kinkeldey, Stockmair & Schwanhäusser Anwaltssozietät

(57) **Abstract**

A vehicle perimeter display device (13) (10) is provided that can automatically display images of a vehicle's perimeter to a driver (2). The vehicle perimeter display device (10) basically has a CCD camera (11) arranged on the passenger side of the vehicle (1) to image an perimeter imaging range α₁ of the area on the left side of the vehicle (1), a first IR camera (12a) arranged in front of the driver (2) to image infrared light rays in a first interior imaging range β₁, a second IR camera (12b) arranged on the passenger side of the driver (2) to image infrared light rays in a second interior imaging range β₂, a monitor (13) that displays image information obtained by navigation image information from a navigation system and the CCD camera (11), and a control unit (15) that extracts head movements of the driver's head (3) from the infrared image information obtained by the IR cameras (12a, 12b) and to switch the display of the monitor (13) from displaying navigation images to the image information of the perimeter on the left side of the vehicle (1) obtained by the CCD camera (11) based on the head movements of the driver's head (3).

## Description

### BACKGROUND OF THE INVENTION

### Field of the Invention

The present invention relates to a vehicle perimeter display device that uses a camera to obtain an image of a perimeter of a vehicle, and then display the image of the perimeter of the vehicle on a monitor provided inside the vehicle's cabin. Background Information

Vehicle perimeter display devices are known which function to verify the perimeter of vehicles at the blind spots occurring between the cabin mirror and the door mirrors by providing color video cameras at the perimeter of the vehicle as well as on the cabin mirror provided inside the vehicle cabin and on the door mirrors provided on the front doors and then displaying image information of the perimeter of the vehicle obtained by these cameras on a monitor installed in the dashboard. For example, Japanese Laid-Open Patent Publication No. 2002-204446 discloses such a vehicle perimeter display device.

In view of the above, it will be apparent to those skilled in the art from this disclosure that there exists a need for an improved vehicle perimeter display device. This invention addresses this need in the art as well as other needs, which will become apparent to those skilled in the art from this disclosure.

### SUMMARY OF THE INVENTION

It has been discovered that it is desirable to use a single display device for both displaying the navigation image information mapping the vehicle's position mapped in map data of a navigation system and the image information of the perimeter of the vehicle obtained by a camera. In order for the display device to display device to display both the navigation image information and the image information of the perimeter of the vehicle, the images must be suitably switched as necessary.

In Japanese Laid-Open Patent Publication No. 2002-204446, switching the display of the display device from the navigation image information to the image information of the vehicle's perimeter is performed manually by providing the driver operating special switches or together with turn signal control. It has been found that there are several disadvantages to this type of manual switching between the navigation image information and the image information of the vehicle's perimeter. For example, the driver may find it troublesome to operate the switches while driving. Also, there are potentially problems with the image switching not happening together with turn signal control at low-speeds of the vehicle when parking.

The present invention relates to a vehicle perimeter display device that uses a camera to obtain an image of a perimeter of a vehicle, and then display the image of the perimeter of the vehicle on a monitor provided inside the vehicle's cabin. In particular, one object of the present invention is to provide a vehicle perimeter display device that can automatically display images of a vehicle perimeter in a monitor.

In order to achieve the objective mentioned above, a vehicle perimeter display device is provided according to the present invention that comprises a perimeter imaging device, an interior imaging device, a display device and a control unit. The perimeter imaging device is configured and arranged to obtain an image of a perimeter area of a vehicle. The interior imaging device is configured and arranged to obtain an interior vehicle image including a head of a driver. The display device is configured and arranged to display perimeter image information obtained by the perimeter imaging device. The control unit is configured to extract head movements of a head of a driver from interior image information obtained by the interior imaging device, and to control the display device to display the perimeter image information obtained by the perimeter imaging device based on the head movements of the head of the driver.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:

Figure 1 is a diagrammatic top plan view of a vehicle equipped with a vehicle perimeter display device in accordance with one preferred embodiment of the present invention;

Figure 2 is a block diagram showing the basic composition of the vehicle perimeter display device in accordance with one preferred embodiment of the present invention;

Figure 3 is a diagrammatic top plan view of the vehicle equipped with the vehicle perimeter display device in accordance with one preferred embodiment of the present invention that singles out the X-axis component from the head movements of the head of the driver of Figure 1;

Figure 4 is a diagrammatic front elevational view of the vehicle perimeter display device that singles out the Z-axis component from the head movements of the head of the driver of Figure 1;

Figure 5 is a diagrammatic top plan view of the vehicle perimeter display device that singles out the Y-axis component from the head movements of the head of the driver of Figure 1; and

Figure 6 is a flowchart showing the processing of the monitor display automatic switching the vehicle perimeter display device in accordance with one preferred embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

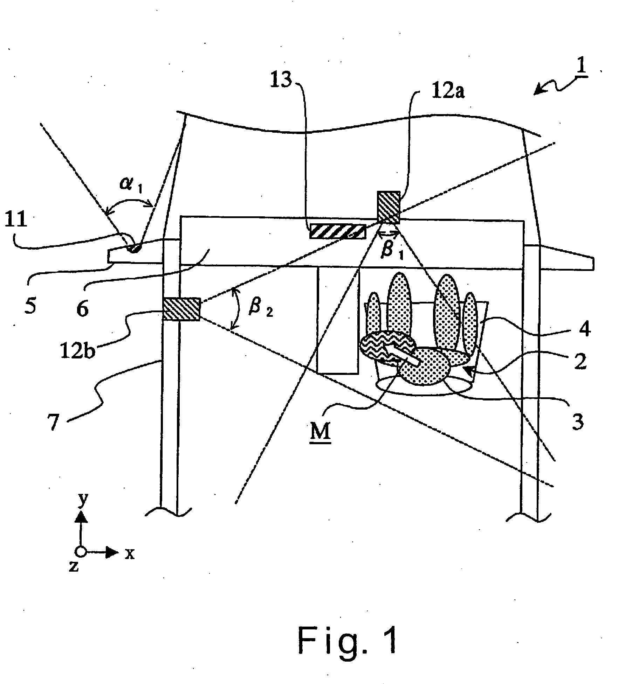

Referring initially to Figures 1-3, a vehicle 1 is illustrated that is equipped with vehicle perimeter display device 10 in accordance with one embodiment of the present invention. As shown in Figure 1, the vehicle perimeter display device 10 provides a driver 2 with images of a blind spot of the vehicle 1 by obtaining images of the blind spot based on head movements of a head 3 of the driver 2 while seated in a driver's seat 4. In the illustrated embodiment, the vehicle perimeter display device 10 is partially embedded in, for example, a side mirror 5 on the passenger side so as to allow imaging of an exterior or perimeter imaging range α₁ of a perimeter area on the left side of the vehicle 1 that includes the blind spot for the driver 2.

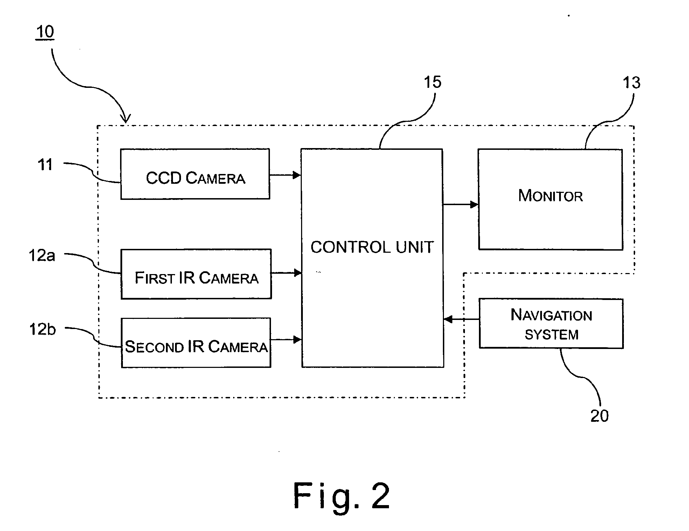

As shown in Figures 1 and 2, the vehicle perimeter display device 10 of the present invention basically comprises a CCD camera 11, a pair of infrared light cameras (IR camera) 12a and 12b, a monitor 13, a control unit 15 and a navigation system 20.

The CCD camera 11 obtains images of the perimeter area on the left side of the vehicle 1, while the IR cameras 12a and 12b obtain images of the head 3 of the driver 2. The monitor 13 displays the images taken by the CCD camera 11. In particular, the monitor 13 is configured to automatically switch between displaying perimeter image information of the left side of the vehicle 1 obtained by the CCD camera 11 and displaying navigation image information from a navigation system 20 as described later. Basically, the control unit 15 automatically switches the display of the monitor 13 between displaying the navigation image information and the perimeter image information based on head movements of the head 3 of the driver 2.

In the figures, the vehicle perimeter display device 10 is designed so that the control unit 15 extracts the head movements of the head 3 of the driver 2 from the infrared light image information obtained by the infrared light cameras 12a and 12b, automatically switches from the navigation image information and displays the perimeter image information of the left side of the vehicle 1 obtained by the CCD camera 11 in the monitor 13 based on the extracted movements of the head 3, and then verifies the perimeter of the left side of the vehicle 1. In other words, in the vehicle perimeter display device 10 of the present invention, the perimeter image information of the vehicle perimeter is selectively displayed in the monitor (display device) 13 based on the interior image information produced by the infrared light cameras (infrared light imaging device) 12a and 12b which is obtained from infrared light rays generated from the driver 2 or infrared light rays reflected from the driver 2. The control unit 15 extracts the movements of the head 3 of the driver 2 from this interior image information and then detects noticeable movements of the driver 2 that can be assumed to indicate the clear intent to switch the display of the monitor 13. In this manner, since the perimeter images of the vehicle perimeter can be automatically displayed in the monitor 13 based on the actions of the driver 2, the driver 2 does not have to operate special switches. In addition, the perimeter images can also be automatically switched at the low-speeds of the vehicle when parking eliminating the trouble the driver 2 experiences when switching images.

As shown in Figure 1, the CCD camera 11 of the vehicle perimeter display device 10 is embedded in, for example, the side mirror 5 on the passenger side to allow imaging of the exterior or perimeter imaging range α₁ of the perimeter area on the left side of the vehicle 1 that includes the blind spot for the driver 2. As shown in Figure 2, the CCD camera 11 is connected to allow image information consisting of the obtained perimeter on the left side of the vehicle 1 to be input to the control unit 15.

The two IR cameras 12a and 12b of the vehicle perimeter display device 10 are an imaging section that visualizes and images infrared light rays generated from an object. As shown in Figure 1, the first IR camera 12a is, for example, provided over the dashboard 6 of the vehicle 1 to make it possible to obtain images toward the front of the driver 2. In other words, a first interior imaging range β₁ as viewed from the front of the vehicle 1 towards the rear is obtained by the first IR camera 12a. In contrast, the second IR camera 12b is provided on the front door 7 on the passenger side to make it possible to obtain images toward the left side of the driver 2. In other words, a second interior imaging range β₂ as viewed from the left side of the vehicle 1 towards the right side is obtained by the second IR camera 12b. The head 3 of the driver 2 is included in at least one of the imaging ranges β₁ or β₂ of the IR cameras 12a and 12b.

As shown in Figure 2, the first and second IR cameras 12a and 12b are connected so as to allow the first and second infrared light image information including the imaged head 3 of the driver 2 to be input to the control unit 15. The installation locations of the IR camera 12a and 12b are not limited to any particular installation locations mentioned above. The IR cameras 12a and 12b can be installed at, for example, the roof or the front pillar if the location is where head movements of the head 3 of the driver 2 can be obtained.

The monitor 13 of the vehicle perimeter display device 10 related to this embodiment is, for example a liquid crystal (LCD) display. Preferably, the monitor 13 is disposed at an area of the dashboard 6 where the driver 2 can easily view the monitor 13. In addition to the perimeter image information of the left side of the vehicle 1 obtained by the above-mentioned CCD camera 11 being displayed in the monitor 13, the navigation image information from the navigation system 20 can also be switched to and displayed in the monitor 13. As shown in Figure 2, this monitor 13 is connected to the control unit 15 so as to allow the perimeter image information of the left side of the vehicle 1 and the navigation image information to be input to the monitor 13.

Although details of the navigation system 20 installed in the vehicle 1 in this embodiment are not shown, the navigation system 20 is configured to read map data from, for example, a DVD-ROM and also receive radio waves transmitted from a satellite, calculate the current position of the vehicle itself, and then display the navigation image information in which the position of the vehicle itself is mapped in the above-mentioned map data in the monitor 13. As shown in Figure 2, this navigation system 20 is connected to the control unit 15 so as to allow the navigation image information that underwent the above-mentioned mapping processing to be input.

The control unit 15 preferably includes a microcomputer with a monitor display control program that processes the image information from the cameras 12a and 12b and controls the display of the monitor 13, as discussed below. The control unit 15 can also include other conventional components such as an input interface circuit, an output interface circuit, and storage devices such as a ROM (Read Only Memory) device and a RAM (Random Access Memory) device. The microcomputer of the control unit 15 is programmed to control the monitor 13 to automatically switch between the navigation information being displayed to the perimeter image information based on the head movements of the driver 2. It will be apparent to those skilled in the art from this disclosure that the precise structure and algorithms for control unit 15 can be any combination of hardware and software that will carry out the functions of the present invention. In other words, "means plus function" clauses as utilized in the specification and claims should include any structure or hardware and/or algorithm or software that can be utilized to carry out the function of the "means plus function" clause.

The control unit 15 has an image processing section that is configured to extract the head movements of the head 3 of the driver 2 from first and second infrared light image information obtained by the first and second IR cameras 12a and 12b, and then switch the display of the monitor 13 from the navigation image information to the perimeter image information of the left side perimeter of the vehicle 1 when a head movement of the driver 2 is detected that can be assumed to indicate the clear intent to switch the display.

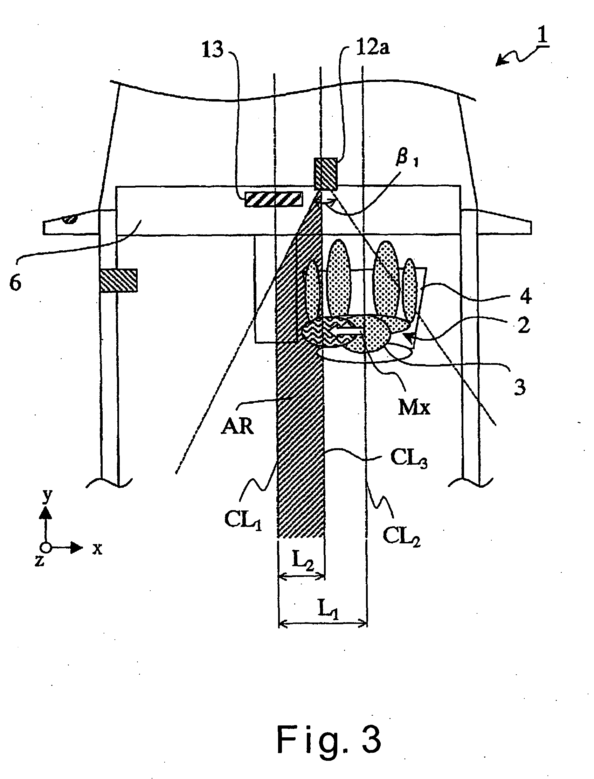

Referring now to Figures 3-5, the control unit 15 is configured and arranged to divide up the head movements M of the driver 2 into three components to indicate the clear intent to switch the display. In other words, the movement of the head 3 of the driver 2 can be defined into three components. The figures do not show actual movements of the driver 2.

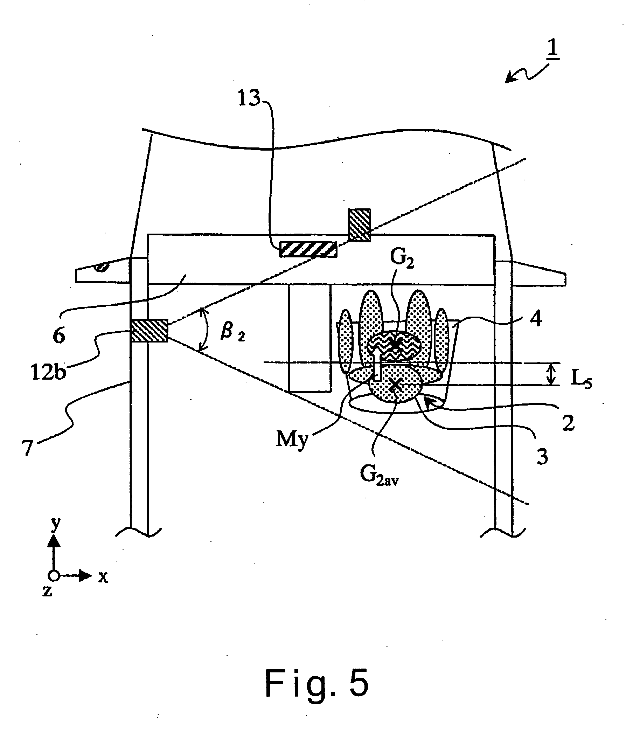

As shown in Figure 1, when the head 3 of the driver 2 moves to perform a head movement M so as to look at the left side of the vehicle 1 in order to verify the perimeter of the left side of the vehicle 1 in this embodiment, the driver 2 is considered to have the intent of switching the display of the monitor 13. Therefore, the control unit 15 performs image processing for each of the first and second infrared light image information obtained by the first and second IR cameras 12a and 12b, and then determines whether or not there is intent to switch the display of the monitor 13. In particular, the head movement M of the head 3 of the driver 2 is divided up into an X-axis component Mx that follows the left to right direction relative to the vehicle 1 (movement in the X-axis direction in Figure 1 and Figure 3), a Y-axis component My that follows the front to rear direction relative to the vehicle 1 (movement in the Y-axis direction in Figure 1 and Figure 5), and a Z-axis component Mz that follows the upper to lower direction relative to the vehicle 1 (movement in the Z-axis direction in Figure 1 and Figure 5). After extracting the head movements of the head 3 of the driver 2 for each component, the control unit 15 compares the extracted head images to a designated condition.

In the following, extracting movements in each component Mx, My and Mz which comprise the head movements M of the head 3 of the driver 2 and comparing each to a designated condition will be now described.

At first, the X-axis component Mx will be described. As shown in Figure 3, the control unit 15 acquires a first infrared image information obtained by the first IR camera 12a provided above the dashboard 6 of the vehicle 1. Next, the control unit 15 performs image processing, such as binary value processing, on the first infrared image information, and then extracts a first infrared emission portion that indicates the head 3 of the driver 2 in the first infrared image information. From the viewpoint of extraction accuracy, the infrared emission portion that indicates the head 3 of the driver 2 (the extraction target) is preferably, for example, the driver's face that exposes a great deal of the driver's skin. The temperature of the infrared emission portion that is extracted is between 30°C to 35°C and the temperature range is preferably between 32°C to 33°C.

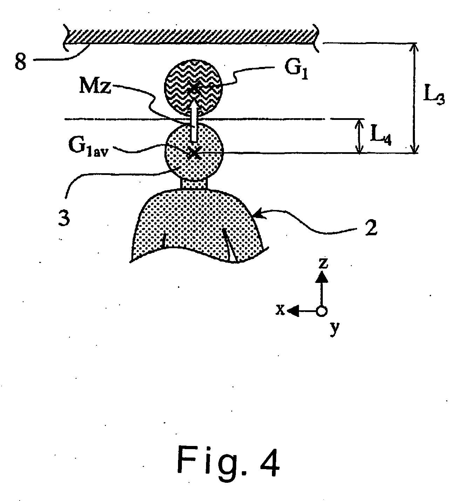

Then, the control unit 15 determines whether or not this extracted first infrared emission portion entered into a previously set designated region AR using the X-axis component Mx of the head 3 of the driver 2. In this embodiment, as shown in Figure 4, the designated region AR used for this determination is a region positioned between a first center line CL₁ and a third center line CL₃. The first center line CL₁ is on of the borders of this designated region AR. The first center line CL₁ is a center line that follows the front /rear direction of the vehicle 1. The third center line CL₃ is a center line positioned at almost the center between a second center line CL₂ that follows the front / rear direction of the driver's seat 4 (1/2 L₁ ≒ L₂). Furthermore, the designated region AR can be freely set by, for example, the physique of the driver 2 but it is preferable to make the settings such that the head 3 of the driver 2 does not enter into the region too much during normal driving.

Next, the Z-axis component Mz will be described. As shown in Figure 4, the control unit 15 acquires a first infrared image information obtained by the first IR camera 12a provided above the dashboard 6 of the vehicle 1. Next, the control unit 15 performs image processing on the first infrared image information, and then extracts a first infrared emission portion that indicates the head 3 of the driver 2 in the first infrared image information. Then, the control unit 15 calculates a first center of gravity position G₁ of the first infrared emission portion. The control unit 15 then uses t the Z-axis component Mz of the head 3 of the driver 2 to determine whether or not this extracted first center of gravity position G₁ exceeded a distance L₄ (L₄ ≒ 1/3 L₃). Preferably, the distance L₄ is equivalent to, for example, 1/3 the distance L₃ between a first average center of gravity position G₁ₐᵥ and the roof 8. The first average center of gravity position G_{1aν} used in this determination is a position where the first IR camera 12a always images the head 3 of the driver 2 while the vehicle 1 is normally driving and averages the center of gravity position sampled by the same image processing described above. In addition, the distance L₄ relative to the roof 8 is freely set by, for example, the physique of the driver 2. Instead of the first infrared image information obtained by the first IR camera 12a during the extraction of the Z-axis component Mz, a second infrared image information can be obtained by a second IR camera 12b provided on the front door 7 on the passenger side.

Next, the Y-axis component My will be described. As shown in Figure 5, the control unit 15 acquires a second infrared image information obtained by a second IR camera 12b provided on the front door 7 on the passenger side of the vehicle 1. Next, the control unit 15 performs image processing on the second infrared image information. Then, the control unit 15 extracts a second infrared emission portion that indicates the head 3 of the driver 2 in the second infrared image information and calculates a second center of gravity position G₂ of this portion. The control unit 15 then uses the Y-axis component My of the head 3 of the driver 2 to determine whether or not this extracted second center of gravity position G₂ moved from a second average center of gravity position G₂ₐᵥ farther forward than a designated distance L₅. The second average center of gravity position G₂ₐᵥ used in this determination is a position where the second IR camera 12b always images the head 3 of the driver 2 while the vehicle 1 is normally driving and averages the center of gravity position of the head 3 of the driver 2 sampled by the same image processing described above. In addition, the designated distance L₅ can be freely set by, for example, the physique of the driver 2.

The control unit 15 performs the determinations described above for each component that comprises the head movements M of the driver 2. When any of the components Mx, My or Mz satisfy the conditions above, the control unit 15 determines whether the head movements M of the head 3 of the driver 2 (movement of the driver looking at the left side of the vehicle 1) is intended to switch the display of the monitor 13. With this movement acting as a trigger, the control unit 15 provides control to switch the display of the monitor 13, that has been displaying the navigation images up to now, to the perimeter image information of the left side perimeter of the vehicle 1 obtained by the CCD camera 11. As long as the driver 2 maintains a body position described above, the image of the left side perimeter of the vehicle 1 is continuously displayed in the monitor 13 until one of the following conditions occur: (1) a designated time passes after the above-mentioned trigger; (2) the vehicle speed reaches a designated speed; or (3) the driver operates the handle of the door. Thereafter, the control unit 15 provides control so as to display the original navigation image in the monitor 13.

Since the head movements of the driver 2 who is driving the vehicle 1 include more frequent movement in the front to rear direction or up and down direction than in the left to right direction, incorrect switching of the display of the monitor 13 is prevented in this embodiment by comparing and determining the designated region AR, that has more stringent conditions than the regions of the Y-axis component My and the Z-axis component Mz, to region of the X-axis component Mx.

From the viewpoint of preventing incorrect switching of the display of the monitor 13 in the comparison between the designated conditions of each component Mx, My and Mz, a timer function is provided in the control unit 15. After each movement component Mx, My and Mz satisfies the designated condition, a count is performed in the timer function and when the movement is within a continuous designated time, a determination can be made that the head movements of the driver 2 is truly intended to switch the display of the monitor 13.

Even further, the vehicle perimeter display device 10 related to the embodiment of the present invention can display images preferred by the driver 2 in the monitor 13 in response to the head movements of the driver 2 when the driver 2 moves more after displaying the image of the left side perimeter of the vehicle 1 in the monitor 13.

In detail, when the head 3 of the driver 2 moves more in the left direction while the image of the left side perimeter of the vehicle 1 is already displayed in the monitor 13, the control unit 15 then uses image processing to calculate the head movement amount of the first and second center of gravity positions G₁ and G₂ and then enlarges the image displayed in the monitor 13 by controlling the CCD camera 11 so as to zoom in the CCD camera 11 based on that movement amount.

In contrast, when the head 3 of the driver 2 moves towards the rear or towards the right side while the image of the left side perimeter of the vehicle 1 is already displayed in the monitor 13, the control unit 15 uses image processing to calculate the head movement amount of the first and second center of gravity positions G₁ and G₂ and then reduces the image displayed in the monitor 13 by controlling the CCD camera 11 so as to zoom out the CCD camera 11 based on that movement amount.

Enlarging and reducing the image displayed in the monitor 13 is not limited to an optical zoom in / zoom out function utilizing the CCD camera 11. For example, enlarging and reducing the image can be achieved by the control unit 15 performing image processing on images input from the CCD camera 11.

The position of the CCD camera 11 can also be allowed to change. For example, a camera drive mechanism that has a stepping motor, or similar device, can be placed close to the CCD camera 11 and the camera drive mechanism driven based on control instructions from the control unit 15 to change the optical axis of the CCD camera 11 in response to the head movements of the driver 2 and point the CCD camera 11 in a direction desired by the driver 2.

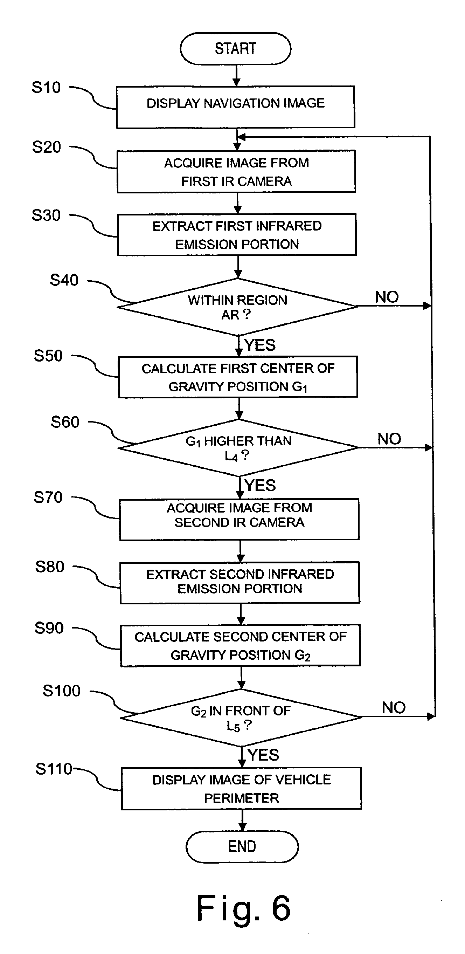

The process to automatically switch the image displayed in the monitor 13 in the vehicle perimeter display device 10 related to this embodiment will be described below referring to Figure 6.

As shown in Figure 6, when, for example, the head 3 of the driver 2 moves so as to look towards the left side in order to verify the perimeter area of the left side of the vehicle 1 while driving from a state in which a navigation image from the navigation system 20 is displayed in the monitor 13 and the vehicle is being driven normally (step S10), the control unit 15 will initially acquire the first infrared image information obtained by the first IR camera 12a (step S20). After acquiring the first infrared image information, the control unit 15 will then perform image processing on the acquired first infrared image information. After this, the control unit 15 extracts the first infrared emission portion that indicates the head 3 of the driver 2 (step S30). Next, the control unit 15 determines whether or not this extracted first infrared emission portion entered into the designated region AR using the X-axis component Mx of the head 3 of the driver 2 (step S40).

When the determination is that the first infrared emission portion has not entered into the designated region AR in step S40 (NO in step S40), the head movement M of the head 3 of the driver 2 can be assumed to not be a head movement that indicates the intent to switch the display of the monitor 13. Therefore, the navigation image is left displayed in the monitor 13, and the process returns to step S20.

When the determination is that the first infrared emission portion entered into the designated region AR in step S40 (YES in step S40), a first center of gravity position G₁ of the first infrared emission portion is calculated (step S50) that indicates the head 3 of the driver 2 further extracted using the image processing described above. A determination is then made as to whether or not this first center of gravity position G₁ exceeded the distance L₄ relative to the roof 8 using the Z-axis component Mz of the head 3 of the driver 2 (step S60).

When the determination is that the first center of gravity position G₁ has not exceeded the distance L₄ relative to the roof 8 in step S60 (NO in step S60), then the head movement M of the head 3 of the driver 2 can be assumed to not be a head movement that indicates the intent to switch the display of the monitor 13. Therefore, the navigation image is left displayed in the monitor 13, and the process returns to step S20. In addition, the control unit 15, for example, averages and finds a center of gravity position that is sampled from each of the first infrared image information obtained by the first IR camera 12a during normal driving of the vehicle 1 in step S 10 for setting the first average center of gravity position G₁ₐᵥ.

When the determination is that the first center of gravity position G₁ has exceeded the distance L₄ relative to the roof 8 in step S60 (YES in step S60), the control unit 15 acquires the second infrared image information obtained by the second IR camera 12b (step S70). The control unit 15 then performs image processing on the acquired second infrared image information. After this, the control unit 15 initially extracts the second infrared emission portion that indicates the head 3 of the driver 2 (step S80). Next, the control unit 15 calculates the second center of gravity position G₂ of this second infrared emission portion (step S90), and then uses the Y-axis component My of the head 3 of the driver 2 to determine whether or not this second center of gravity position G₂ is positioned in front of the designated distance L₅ away from the average center of gravity position G₂ₐᵥ (step S100).

When the determination is that the second center of gravity position G₂ is not positioned in front of the designated distance L₅ away from the second average center of gravity position G₁ₐᵥ in step S100 (NO in step S100), the movement M of the head 3 of the driver 2 can be assumed to not be a head movement that indicates the intent to switch the display of the monitor 13. Therefore, the navigation image is left displayed in the monitor 13, and the process returns to step S20. In addition, the control unit 15, for example, averages and finds a center of gravity position that is always sampled from the second infrared image information obtained by the second IR camera 12b during normal driving of the vehicle 1 in step S 10 for setting the second average center of gravity position G₂ₐᵥ used in the determination of step S100.

When the determination is that the second center of gravity position G₂ is positioned in front of the designated distance L₅ away from the second average center of gravity position G₁ₐᵥ in step S100 (YES in step S100), all components Mx, My and Mz will satisfy each of the conditions mentioned above, and the movement M of the head 3 of the driver 2 can be assumed to be a movement that indicates the intent to switch the display of the monitor 13. Therefore, the control unit 15 provides control to switch the monitor 13 to the image of the left side perimeter of the vehicle 1 obtained by the CCD camera 11 (step S110).

As described above, in the vehicle perimeter display device 10 related to the embodiment of the present invention, the need for the driver 2 to operate special switches is eliminated by displaying image information of the vehicle perimeter in the monitor 13 when infrared light rays generated from the head 3 of the driver 2 are obtained by the IR cameras 12a and 12b, the control unit 15 extracts the movements of the head 3 of the driver 2 from this imaged image information and then detects noticeable movements of the driver 2 that can be assumed to indicate a clear intent to switch the display. It is also possible to automatically switch the image at the low-speeds of the vehicle 1 when parking thereby eliminating the trouble the driver 2 experiences when switching images.

The embodiments described above are made to make the invention easy to understand, but are not written to limit the invention. Consequently, each element disclosed in the embodiment described above intends to include all design changes or equivalent parts that are within the technical scope of the invention. For example, although the description in the embodiment described above has a CCD camera installed in the side mirror on the passenger side to allow the left side perimeter of the vehicle to be verified, the present invention is not particularly limited to this. As an example, a CCD camera can be installed in the side mirror on the passenger side, on the front bumper or at the rear center of the roof and images of the vehicle perimeter in directions desired by the driver automatically displayed in the monitor based on movements of the head of the driver by attaching noticeable movements of the driver that verify the right side perimeter of the vehicle, intersections with poor visibility or the rear perimeter of the vehicle to each component.

Furthermore, although the description in the embodiment described above has the first and second IR cameras installed and the three components of the X-axis, Y-axis and Z-axis extracted from the movement of the head of the driver, the present invention is not particularly limited to this. As an example, when pursuing cost-performance of the device, just the first IR camera need be installed to extract only the X-axis component from the movement of the head of the driver. The composition can be freely modified to combine and extract any of the components or two of the components.

Even further, although the description in the embodiment described above has two IR cameras installed and the head of the driver obtained from the front and side, the present invention is not particularly limited to this. As an example, one IR camera can be provided on the front pillar on the passenger side and the infrared image information obtained by this IR camera divided into vectors to extract each component that comprises the movement of the head of the driver.

Besides this, although the description in the embodiment described above using an infrared light imaging device that makes infrared light rays generated from an object visible, an infrared light imaging device can also be used that makes infrared light rays reflected from an object visible. When the amount of infrared light is not sufficient at night, a separate infrared light can be installed to illuminate the driver.

Also, used herein, the following directional terms "forward, rearward, above, downward, vertical, horizontal, below and transverse" as well as any other similar directional terms refer to those directions of a vehicle equipped with the present invention. Accordingly, these terms, as utilized to describe the present invention should be interpreted relative to a vehicle equipped with the present invention.

The term "configured" as used herein to describe a component, section or part of a device includes hardware and/or software that is constructed and/or programmed to carry out the desired function. Moreover, terms that are expressed as "means-plus function" in the claims should include any structure that can be utilized to carry out the function of that part of the present invention. The terms of degree such as "substantially", "about" and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

This application claims priority to Japanese Patent Application No. 2003-204609. The entire disclosure of Japanese Patent Application No. 2003-204609 is hereby incorporated herein by reference.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents. Thus, the scope of the invention is not limited to the disclosed embodiments.

## Claims

1. A vehicle perimeter display device (10) comprising:
a perimeter imaging device (11) configured and arranged to obtain an image of a perimeter area of a vehicle;
an interior imaging device (12a, 12b) configured and arranged to obtain an interior vehicle image including a head of a driver;
a display device (13) configured and arranged to display perimeter image information obtained by the perimeter imaging device (11); and
a control unit (15) configured to extract head movements of the head of the driver from interior image information obtained by the interior imaging device (12a, 12b), and to control the display device (13) to display the perimeter image information obtained by the perimeter imaging device (11) based on the head movements of the head of the driver.

2. The vehicle perimeter display device (10) as recited in claim 1, wherein
the control unit (15) is further configured to extract the head movements in at least one direction of the head of the driver from the interior image information obtained by the interior imaging device (12a, 12b), and to control the display device (13) to display the perimeter image information obtained by the perimeter imaging device (11) based on the head movements in the at least one direction of the head of the driver.

3. The vehicle perimeter display device as recited in claim 1, wherein
the control unit is further configured to extract the head movements in at least two directions of the head of the driver from the interior image information obtained by the interior imaging device, and to control the display device to display the perimeter image information obtained by the perimeter imaging device based on the head movements in the at least two directions of the head of the driver.

4. The vehicle perimeter display device as recited in claim 1, wherein
the control unit is further configured to extract the head movements in three directions of the head of the driver from the interior image information obtained by the interior imaging device, and to control the display device to display the perimeter image information obtained by the perimeter imaging device based on the head movements in the three directions of the head of the driver.

5. The vehicle perimeter display device (10) as recited in claim 2, wherein
the control unit (15) is further configured to control the display device (13) to display the perimeter image information obtained by the perimeter imaging device (11) when the head of the driver enters within a designated region (AR) due to the head movements in the at least one direction of the head of the driver.

6. The vehicle perimeter display device (10) as recited in claim 2 or 5, wherein
the control unit (15) is further configured to control the display device (13) to display the perimeter image information obtained by the perimeter imaging device (11) when the head of the driver moves a predetermined distance towards one part of the vehicle due to the head movements in the at least one direction of the head of the driver.

7. The vehicle perimeter display device (10) as recited in anyone of claims 2, 5 and 6, wherein
the control unit (15) is further configured to control the display device (13) to display the perimeter image information obtained by the perimeter imaging device (11) when the position of the head of the driver exceeds a predetermined threshold value due to the head movements in the at least one direction of the head of the driver.

8. The vehicle perimeter display device (10) as recited in anyone of claims 1 to 7, wherein
the control unit (15) is further configured to alter the image obtained by the perimeter imaging device (11) to produce an altered image, and to control the display device (13) to display the altered image in the display device (13) based on the head movements of the head of the driver.

9. The vehicle perimeter display device (10) as recited in claim 8, wherein
the control unit (15) is further configured to produce the altered image by performing at least one of expanding and contracting the image obtained by the perimeter imaging device (11).

10. The vehicle perimeter display device 10) as recited in anyone of claims 1 to 9, further comprising
a navigation device (20) configured to produce navigation image information that is to be selectively displayed on the display device (13), and the control unit (15) being further to control the display device (13) to selectively switch from displaying the navigation image information and the perimeter image information on the display device (13).

11. The vehicle perimeter display device (10) as recited in anyone of claims 1 to 10, wherein
the interior imaging device (12a, 12b) is an infrared light imaging device (12a, 12b) that is configured and arranged to obtain the interior vehicle image using infrared light rays from the driver.
